# EUROPÄISCHE PATENTSCHRIFT

(11) **EP 2 059 319 B1**
(45) Veröffentlichungstag und Bekanntmachung des Hinweises auf die Patenterteilung: **17.06.2015**
(21) Anmeldenummer: 07785635.9
(22) Anmeldetag: 14.07.2007
(51) Int. Cl.: B01D 29/11, B01D 29/64, B30B 9/12, C05F 3/06, C05F 9/02, B01D 29/82

(54) **VERFAHREN UND VORRICHTUNG ZUR TRENNUNG VON FOSSILER UND NATIVER ORGANIK AUS ORGANISCHEN STOFFGEMISCHEN**
METHOD AND DEVICE FOR SEPARATING FOSSIL AND NATIVE ORGANIC MATTER FROM MIXTURES OF ORGANIC SUBSTANCES
PROCÉDÉ ET DISPOSITIF DESTINÉS À SÉPARER DES SUBSTANCES ORGANIQUES FOSSILES ET NATIVES DE MÉLANGES DE SUBSTANCES ORGANIQUES

(30) Priorität: 06.09.2006 DE 102006042161
(43) Veröffentlichungstag der Anmeldung: 20.05.2009
(73) Patentinhaber: EcoEnergy Gesellschaft für Energie- und Umwelttechnik mbH, 37445 Walkenried (DE)
(72) Erfinder: SCHU, Reinhard, 37445 Walkenried (DE)
(74) Vertreter: Vomberg, Friedhelm
(86) Internationale Anmeldenummer: PCT/DE2007/001263
(87) Internationale Veröffentlichungsnummer: WO 2008/028444

(56) Entgegenhaltungen:
- EP-A- 0 858 880
- WO-A-83/03999
- WO-A-94/07688
- AU-B2- 547 159
- DE-A1- 3 009 710
- DE-A1- 19 602 189
- US-A- 4 581 992
- US-A- 5 413 618

## Beschreibung

Die Entsorgung von Siedlungsabfällen sowie gewerblichen Abfällen stellt hinsichtlich der von der Politik immer stärker geforderten Nachhaltigkeit ein Problem dar. Die bisher beschrittenen Wege, nämlich die Reduzierung der Abfallmengen durch Abfallvermeidung und die Einführung der separaten Wertstofferfassung haben erste Erfolge gebracht. Für die verbleibenden Abfälle, die im Wesentlichen als Dreistoffgemisch aus Inertstoffen, Organik und Wasser bestehen und die keiner direkten Verwertung zugeführt werden können, sind bereits in der WO 2005/051547 A1 Vorschläge unterbreitet worden. Um stofflich und/oder energetisch verwertbare Fraktionen zu erzeugen und Deponierungen weitgehend zu vermeiden, wird eine nassmechanische Behandlung von Stoffgemischen vorgeschlagen, die aus Inertstoffen, Wasser sowie organischen Stoffen mit einem wasserlöslichen und biologisch umsetzbaren Anteil besteht, wobei zunächst das Stoffgemisch in einem Mischer kontinuierlich mit Wasser als Trenn- und Waschmittel gemischt wird, ohne die Bestandteile des Gemisches abzuscheiden, bis ein Trockensubstanzgehalt von 15% bis 25% eingestellt ist. Hiernach wird in einer ersten Stufe das Stoffgemisch aus dem Mischer mit einem Förderer ausgetragen, wobei durch die Zugabe von Wasser die leichten Bestandteile in einen Fest-Flüssiggemisch mit einem Trockensubstanzgehalt von 10% bis 20% gelöst bleiben, während die schweren Bestandteile sich absetzen und mit dem Förderer als erste schwere Inertfraktion mit einer Korngröße > 25 mm separiert werden. Aus dem verbleibenden Fest-Flüssiggemisch werden organische Leichtstoffe einer Korngröße von 30 mm bis 120 mm als erste organische Leichtfraktion abgesiebt, nachgewaschen und gepresst. Diese Fraktion kann ggf. nach einer Trocknung durch Verbrennung oder Vergasung energetisch verwertet werden, soweit bei Einhaltung der entsprechenden Grenzwerte keine stoffliche Verwertung in der Landwirtschaft in Betracht kommt.

In einer zweiten Stufe werden aus der verbleibenden Suspension mit einem eingestellten Trockensubstanzgehalt von 6 % bis 12 % zunächst inerte Schwerstoffe einer Korngröße von 2 mm bis 25 mm durch Schwerkraft und anschließend weitere organische Leichtstoffe einer Korngröße von 3 mm bis 30 mm durch Siebung und Spülung abgeschieden. Die hierbei abgesiebte organische Fraktion kann ebenfalls mit Wasser gewaschen und abgepresst werden.

In einer dritten Stufe werden aus der verbleibenden Suspension mit einem eingestellten Trockensubstanzgehalt von 3 % bis 8 % weitere inerte Schwerstoffe einer Korngröße < 2 mm durch Zentrifugalkräfte und danach weitere organische Leichtstoffe einher Korngröße von 150 µm bis 3 µm durch Siebung und Spülung abgeschieden. Der bei der Feinsiebung entstehende Filterkuchen lässt sich ebenfalls abpressen und beispielsweise in der Landwirtschaft als Düngemittel oder als Bodenverbesserer einsetzen, wozu die Organik entweder in Kompostierungsanlagen kompostiert oder in Vergärungsanlagen vergoren und kompostiert oder getrocknet und als lose Kompostschüttung oder als Düngemittel eingesetzt wird.

Bei der Weiterbehandlung organischer Stoffgemische, die sowohl fossile als auch native Organik enthalten, setzt die vorliegende Erfindung an.

Nach dem Stand der Technik ist die Extrusion in der Kunststoffverarbeitung und zur Zerfaserung von organischen Stoffen bekannt. So wird in der DE 44 44 745 ein Verfahren zur Herstellung von hochwertigem Pflanzensubstrat aus vorzerkleinerten Holz oder Holzabfällen mit Klärschlamm, Gülleschlamm, Fäkalienschlamm oder Biomüll mit Hilfe eines Schneckenextruders beschrieben, bei dem die genannten Stoffe kontinuierlich in den Schneckenextruder mit einem solchen Durchsatz eingegeben werden, dass das Holz und gröbere Bestandteile zerfasert und intensiv mit den Zusätzen bei Temperaturen von über 100 °C vermischt werden. Durch die eingestellten Temperaturen soll gewährleistet werden, dass Krankheitserreger, Bakterien, Viren, Sporen oder Unkrautsamen abgetötet werden, ein zu hoher Wassergehalt verdampft und am Extruderkopf ein Material austritt, das weitgehend keimfrei ist und sich in seiner Struktur besonders gut als Pflanzensubstrat eignet.

Die DE 10 2004 054 468 A1 beschreibt ein Verfahren zur anaeroben Gärung pflanzlicher Substrate zwecks Herstellung von Biogas, bei dem zur Erzielung einer nachweislich höheren Gasbildungsrate dem Vergärungsprozess eine aufbereitungstechnische Vorstufe außerhalb des Reaktors durch Extrusion der pflanzlichen Substrate so vorgeschaltet werden soll, dass eine hochgradig homogenisierte Biomasse entsteht, deren Zellgefüge weitgehend zerstört ist. Durch gezielte Oberflächenvergrößerung des biogenen Materials soll eine schnellere Nährstoffverfügbarkeit für die Methanbildner ermöglicht werden. Bei Verwendung eines Doppelschneckenextruders entstehen in den Flankenbereichen der Schneckenwellen in der gekapselten und gepanzerten Vorrichtung Druck- und Temperaturverhältnisse, die in der Lage sind, das Zellgefüge von pflanzlichem Material und anderer Biomasse explosionsartig zu zerstören. Hierbei sind Drücke über 5 x 10⁶ Pa und Temperaturen > 120 °C möglich. Problematisch ist bei diesen Verhältnissen, dass etwa in der Stoffmenge enthaltene Kunststoffe verkleben und sich Agglomerate bilden, welche eine nachfolgende Stofftrennung erschweren. Das in der genannten Druckschrift beschriebene Verfahren ist ferner ohne Vorbehandlung der Eingangstoffe nicht durchführbar, da ohne vorherige Inertstoffabscheidung, d. h. insbesondere die Entfernung von Steinen, Kies, Sand und Metallen, ein hoher Verschleiß der Anlage in Kauf zu nehmen ist. Eine mögliche geeignete Vorbehandlung beschreibt die bereits zitierte WO 2005/051547 A1.

In der US-A-5,413,618 wird ein Verfahren zur Herstellung von hochwertigem Torfersatz aus organischem Material beschrieben. Nach einem Mischvorgang des Rohmaterials wird dieses einer Thermoschneckenpresse TSP zugeführt. Dabei wird durch die mechanische Bearbeitung des Materials Wärme freigesetzt. Zur Regulierung der Wärme des Materials ist zudem eine Heiz- oder Kühlvorrichtung vorgesehen. Nach der Behandlung des Materials in der Thermoschneckenpresse wird das Material gesiebt, wobei zu große Materialteilchen in die Schneckenpresse zurückgeführt werden. Abschließend wird das zerkleinerte Material getrocknet. Vorzugsweise wird zur Durchführung dieses Verfahrens eine Thermoschneckenpresse gemäß PCT/CH83/00059 verwendet, die aus einem Gehäuse, eine eintrittseitigen Beschickungsöffnung, einem austrittsseitigen Form- bzw. Brikettierkopf und einer über ein Getriebe angetriebenen Schneckenwelle besteht, wobei das Gehäuse in Gehäuseelemente unterteilt ist, zwischen denen eine Drosselscheibe liegt, die den freien Querschnitt der Schnecken unter Bildung eines Durchgangsspalts am Kernumfang der Schnecken sperrt.

Es ist Aufgabe der vorliegenden Erfindung, ein optimiertes Verfahren zur Trennung von fossilen und nativen organischen Stoffen anzugeben.

Diese Aufgabe wird durch das Verfahren nach Anspruch 1 gelöst. Hiernach ist vorgesehen, dass das organische Stoffgemisch einem Entwässerungsschritt, einer thermomechanischen Zelllyse, bei der die native Organik zerkleinert wird, einer Nachentwässerung und einer ersten Siebung unterzogen wird, bei der der zerkleinerte native Organikteil von dem fossilen Organikteil getrennt wird. Durch die Zelllyse, d. h. durch einen Zellaufschluss, wird die Zellmembran bzw. Zellwand zerstört, wodurch der Zellinhalt (auch Zelllysat genannt) freigesetzt wird. Von allen möglichen Zelllysen, nämlich enzymatischen, chemischen, thermischen oder mechanischen, wird im vorliegenden Fall die thermomechanische Zelllyse als Kombination aus mechanischer und thermischer Zelllyse ausgewählt, da hierbei der Zellaufschluss mit einem hohen Entwässerungsgrad, einer Hygienisierung sowie einer biologischen Stabilisierung das Austreiben einer leicht abbaubaren Organik und des Zellwassers möglich ist.

Ferner wird die thermomechanische Zelllyse vorzugsweise bei Temperaturen zwischen 65 °C und maximal 120 °C, vorzugsweise bei maximal 100 °C durchgeführt. Der vorhandene Druck liegt zwischen 10⁶ Pa und 5 x 10⁶ Pa, insbesondere der obere Wert von 5 x 10⁶ Pa wird nicht überschritten. Die Einhaltung der vorgenannten Parameter gewährleistet insbesondere, dass die im Stoffstrom enthaltenen Kunststoffe nicht verkleben, was eine spätere Trennung der Kunststoffe von der übrigen Organik erschwert. Dies ist insbesondere dann erforderlich, falls bei der weiteren Nutzung der Organikfraktion die Kunststofffraktion nicht erwünscht oder gesetzlich nicht erlaubt ist, wie z. B. bei nachfolgendem Einsatz der Organikfraktion in der Papierindustrie, in der weiteren landwirtschaftlichen Verwertung, in einer werkstofflichen Nutzung der in der Biomassefraktion enthaltenen Faserstoffe oder zur energetischen Verwertung in speziellen Biomassekraftwerken oder zur Mitverbrennung in bestehenden Energieerzeugungsanlagen oder zur Ethanolproduktion mittels Vergärungs- oder Vergasungsprozessen gewünscht wird. Auch bei einer spätere Pelletierung oder Brikettierung, die aus technischen oder logistischen Gründen erforderlich ist, ist eine vorherige Abscheidung von Kunststofffraktionen vorteilhaft. U. U. muss auch durch Abtrennung der Kunststofffraktion möglicherweise enthaltenes Polyvenylchlorid (PVC) abgetrennt und damit der für die Verbrennung aufgrund der Korrosionsproblematik oder aus Gründen der Rauchgasreinigungsaufwendungen unerwünschte Chloranteil reduziert werden. Durch Separation von Kunststoffen wird der Heizwert der verbleibenden Biomassefraktion gesenkt, was für spezielle Verbrennungstechnologien, wie z. B. der Rostfeuerung, von Vorteil sein kann. Die abgetrennte Kunststofffraktion kann wegen des hohen Heizwertes energetisch und stofflich effizient in dafür vorgesehenen speziellen Anlagen verwertet werden. Schließlich lässt sich bei Durchführung des Verfahrens ein hoher Reinheitsgrad an nativer Organik einstellen.

Um das Ergebnis der Siebung zu optimieren, wird vor der Siebung eine Trocknung durchgeführt. Mit Hilfe des erfindungsgemäßen Verfahrens wird die native Organik größtenteils bis auf eine Korngröße von 2 mm bis 5 mm oder weniger zerkleinert, während weiche und harte Kunststoffe in Korngrößen zwischen 2 mm bis 5 mm vorliegen. Abgesehen von diesen unterschiedlichen Kornfraktionen, die Voraussetzung für eine wirksame Trennung sind, verhindert eine Trocknung eine Agglomeratbildung durch Anhaften nativer Stoffe an fossilen Stoffen bzw. an Kunststoffteilen, die aus dem Prozess ausgeschleust werden sollen.

Darüber hinaus wird die aus der ersten Siebung gewonnene native Organik mit einem Überkorn > 2 mm bis 30 mm zum Entwässerungsschritt oder unmittelbar zur thermomechanischen Zelllyse zurückgeführt, d. h., dass der Stoffstrom mehrfach die erfindungsgemäße Behandlung aus Entwässerung, Zelllyse, Nachentwässerung, ggf. Trocknung und Siebung erfährt. Materialabhängig ist eine Rückbefeuchtung des Materials vor der wiederholten Behandlung erforderlich.

Die aus der ersten Siebung gewonnene fossile Organik wird einem nachfolgenden ein- oder zweistufigen thermomechanischen Zelllyse, vorzugsweise mit jeweiliger Nachentwässerung und abschließender Siebung unterzogen werden, womit restliche noch vorhandene native Organik zur Erhöhung des Reinheitsgrades der erhaltenen Endprodukte ausgeschleust werden kann.

Das eingegebene Material wird vorgewärmt, um die gewünschte Mindesttemperatur von 65 °C bei der thermomechanischen Zelllyse zu erreichen bzw. deutlich zu überschreiten, ohne jedoch den bereits diskutierten Maximalwert zu überschreiten.

Vorzugsweise bei der einzigen oder ersten Siebung eingestellte Siebgrößen werden so gewählt, dass nach einer Trocknung bei einem Siebschnitt von 2 mm bis 30 mm native Organik abgesiebt wird und vorzugsweise dieses Überkorn zur Erhöhung des Aufschlussgrades in eine Kreislaufführung erneut einer thermomechanischen Zelllyse zugeführt wird.

Eine Vorrichtung zur Durchführung des Verfahrens besitzt eine Schneckenpresse, die nachfolgend mindestens eine Entwässerungsstufe und eine Lysiereinrichtung zum Aufbrechen der Zellen aufweist, der eine Siebeinrichtung zur Trennung fossiler und nativer Organik nachgeschaltet ist.

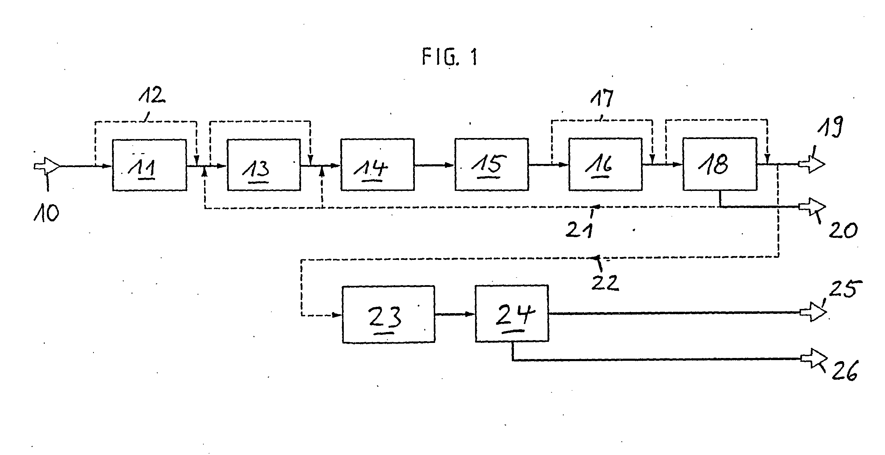

Weitere Ausführungsformen und Vorteile der Erfindung werden anhand der Zeichnungen erläutert. Es zeigen
- Fig. 1: ein Blockfließbild des erfindungsgemäßen Verfahrens und
- Fig. 2: eine schematische Darstellung einer mehrstufigen Schneckenpresse mit einer Lysiereinrichtung.

Das zu behandelnde Material, welches native organische Bestandteile sowie harte und weiche Kunststoffe enthält, wird in Richtung des Pfeils 10 zunächst in einer ersten Stufe 11 von Störstoffen, insbesondere von Metallen und Interstoffen befreit. Soweit das zugeführte Material die Trennverfahren nach DE 103 54 627 A1 (WO 2005/051547 A1) durchlaufen hat, kann das Material entsprechend der strichlinierten Führung 12 unmittelbar der Entwässerung 13 zugeführt werden. Mit dem Abwasser werden bereits gelöste organische Stoffe ausgetragen, die einer anaeroben und aeroben Abwasserreinigung zugeführt werden können. In einer nachfolgenden Stufe 14 wird durch Betrieb oder Beheizung der verwendeten Schneckenpresse eine Temperaturerhöhung im Material auf Werte von 65 °C bis 120 °C, vorzugsweise 95 °C, bei Drucken zwischen 10⁶ bis 5 x 10⁶ Pa erreicht. Unter diesen Verfahrensbedingungen findet eine thermomechanische Zelllyse statt, d. h., die native organische Fraktion wird zerkleinert und aufgefasert. Die Einhaltung einer maximalen Temperatur von 120 °C, vorzugsweise unter 100 °C, wird gewählt, damit die im Material enthaltenen Kunststoffe nicht verkleben. Durch die thermomechanische Zelllyse wird das Zellwasser freigesetzt, das anschließend in einer Nachentwässerung 15 ausgetrieben werden kann, wodurch die biologische Stabilität des Presskuchens verbessert wird und der Trockensubstanzgehalt deutlich auf einen Wert erhöht wird, der durch eine mechanische Entwässerung nicht erreichbar wäre.

Das aufgefaserte und entwässerte Material hat eine flocken- bis flusenartige Konsistenz und kann je nach eingegebenem Ausgangsmaterial einer Trocknung 16 oder (siehe Pfeil 17) unmittelbar einer Siebung 18 mit einem Siebschnitt von 2 mm bis 30 mm zugeführt werden. Durch die Siebung wird der selektiv zerkleinerte native Organikteil von den weitgehend unzerkleinerten Kunststoffen im Überkorn getrennt. Die native Organik 20 wird entweder unmittelbar ausgetragen oder (siehe Pfeil 21) wieder in den Prozess zurückgeschleust, wonach die native Organik entweder nochmals entwässert (falls erforderlich) oder nochmals einer thermomechanischen Zelllyse unterzogen wird. Die aus der Siebung erhaltene fossile Organik wird entweder als Stoff (siehe Pfeil 19) ausgetragen und einer Weiterverwertung, vorzugsweise einer Verbrennung, zugeführt oder entsprechend der Prozessführung 22 einer weiteren ein- bis zweistufigen thermomechanischen Zelllyse 23, ggf. mit einer Nachentwässerung zugeführt, bevor in einer letzten Stufe eine Siebung 24 eine hohe Trennschärfe einer fossilen Organikfraktion 25 von einer native Organikfraktion 26 erlaubt. Entscheidend dafür, ob die nochmalige ein- bis zweistufige thermomechanische Zelllyse 23 durchgeführt wird ist, ob noch nennenswerte Kunststoffanteile im Stoffstrom enthalten sind, die durch einen feineren Siebschnitt in der Stufe 24 entfernt werden können.

Für die Hygienisierung sind neben der Temperatur und der Verweilzeit auch die Effekte der thermomechanischen Zelllyse zu berücksichtigen. Die Hygieneanforderungen an das Produkt sind regional und von dem Ausgangsmaterial abhängig. Eine vorherige Aufheizung des Produktes und u. U. zusätzliche definierte Speicherung vor oder nach dem Pressvorgang kann eine optimale Hygienisierung bewirken.

Die Einhaltung der unteren Temperatur von 65 °C ist für den thermomechanischen Zellaufschluss von wesentlicherer Bedeutung als die Einstellung des Druckes. So konnte beispielsweise beobachtet werden, dass eine Erhöhung des Pressdruckes auf über 5 x 10⁶ Pa keine nennenswerte Auswirkung auf die Zellaufschlussrate hatte, wenn nicht die Temperatur von 65 °C überschritten wurde. Es ist anzunehmen, dass bei Temperaturen oberhalb von 65 °C Zellen instabil werden. Die Stabilität der Zellwände wird u. a. durch die Fibrillen gebildet, die z. B. aus Zellulose, Hemizellulose, Pektin und Lignin bestehen können. Die Fibrillen sind untereinander durch Wasserstoffbrückenbindungen verbunden. Wasserstoffbrückenbindungen werden bei. erhöhten Temperaturen instabil, wodurch sich die Fibrillen gegeneinander leichter verschieben lassen und somit zum Zellaufschluss geringere Scherkräfte benötigt werden. Die Temperatur zur Auffaserung der Zellen sollte vorrangig durch die mechanische Energie in das Produkt eingebracht werden und nicht, wie nach dem Stand der Technik häufig geschehen, durch elektrische Aufheizung, was aufgrund steigender Energiepreise schon aus wirtschaftlichen Gründen nur zweitrangig in Betracht kommt, allenfalls, um die gewünschte Temperatur bei der Zelllyse einzustellen. Daneben ist die Temperatursteuerung zur Verbesserung der Hygienisierung von Bedeutung.

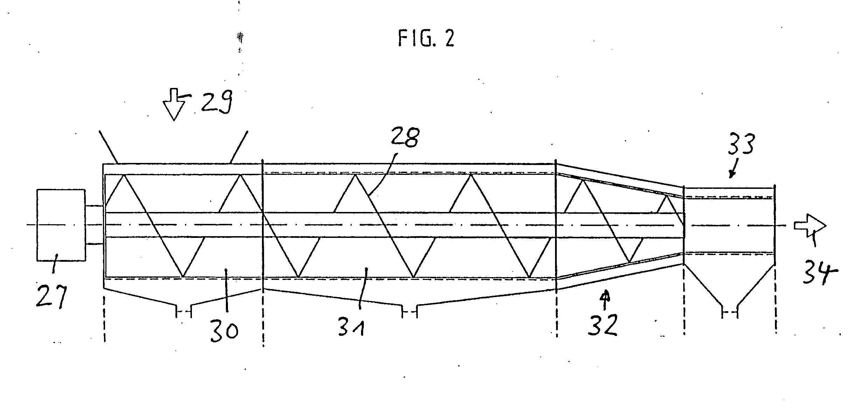

Ein weiteren Bestandteil der Anlage kann die in Fig. 2 dargestellte Schneckenpresse sein, die über einen Antrieb 27 eine Schnecke 28 betreibt, welche das über den Eintrag 29 eingebrachte Material in einer ersten Stufe 30 vorentwässert, in einer zweiten Stufe entwässert und presst, bevor im Bereich 32, der als Lysiereinrichtung bezeichnet werden kann, die Zelllyse durchgeführt wird. In diesem sich verjüngenden Bereich werden die Zellen im Wesentlichen durch thermische Erwärmung auf ca. 95 °C instabil und durch Scherkräfte aufgebrochen, so dass in einer Nachentwässerungsstufe 33 das freigesetzte Zellwasser entfernt werden kann, so dass (siehe Pfeil 19) die fossile Organik, befreit vom abgepressten Zellwasser, abgezogen werden kann. Der erhaltene Stoffstrom 34 kann anschließend unmittelbar einer Siebung oder einer Trocknung zugeführt werden.

## Patentansprüche

1. Verfahren zur Trennung von fossiler und nativer Organik aus organischen Stoffgemischen, bei dem das organische Stoffgemisch einem Entwässerungsschritt (13), einer thermomechanischen Zelllyse (14), bei der die native Organik zerkleinert wird, einer Nachentwässerung (15) und einer ersten Siebung (18) unterzogen wird, bei der der zerkleinerte native Organikteil von dem unzerkleinerten fossilen Organikteil getrennt wird, **dadurch gekennzeichnet, dass**
a) die thermomechanische Zelllyse (14) bei Temperaturen zwischen 65 °C und maximal 120 °C durchgeführt wird,
b) die thermomechanische Zelllyse (14) bei einem Druck zwischen 10⁶ und 5 x 10⁶ Pa durchgeführt wird,
c) dass vor der Siebung (18) eine Trocknung (16) durchgeführt wird,
d) dass die aus der ersten Siebung gewonnene native Organik mit einem Überkorn > 2 mm bis 30 mm zum Entwässerungsschritt (13) oder unmittelbar zur thermomechanischen Zelllyse (14) zurückgeführt wird,
e) dass die aus der ersten Siebung (18) gewonnene fossile Organik (22) einer nachfolgenden ein- oder zweistufigen thermomechanischen Zelllyse (23), vorzugsweise mit jeweiliger Nachentwässerung und abschließender Siebung (24) zugeführt wird und
f) dass das eingebrachte Material (10) vorgewärmt wird.

## Claims

1. A method of separating fossil and native organic matter from organic compositions of matter, whereat the organic composition of matter is subjected to a dewatering (13), a thermomechanical cell lysis (14), where the native organic is broken, a redewatering (15) and a first sieving (18), whereat the part of the broken native organic is separated from the non-broken fossil organic part,
**characterized in that**
a) the thermomechanical cell lysis (14) is carried out at temperatures between 65°C and a maximum of 120°C,
b) the thermomechanical cell lysis (14) is carried out at a pressure between 10⁶ and 5 x 10⁶ Pa,
c) a drying (16) is carried out before the sieving (18),
d) the oversize matter > 2 mm to 30 mm obtained from the first sieving (18) is recirculated in a recycling manner to the dewatering step or to the thermomechanical cell lysis (14),
e) the fossil organic matter (22) obtained from the frist sieving (18) is supplied to a subsequent single- or two-stage thermomechanical cell lysis (23), preferably with in each case redewatering and final sieving (24) and
f) the introduced material (10) is preheated.

## Revendications

1. Procédé de séparation de matière organique fossile et native de mélanges de substances organiques, dans lequel le mélange de substances organiques est soumis à une étape de déshydratation (13), à une lyse cellulaire thermomécanique (14) dans laquelle la matière organique native est broyée, à une post-déshydratation (15) et à premier criblage (18) dans lequel la partie de matière organique native broyée est séparée de la partie de matière organique fossile non broyée, **caractérisé par le fait que**
a) la lyse cellulaire thermomécanique (14) est mise en oeuvre à des températures comprises entre 65 °C et 120 °C au maximum,
b) la lyse cellulaire thermomécanique (14) est mise en oeuvre à une pression comprise entre 10⁶ et 5 x 10⁶ Pa,
c) qu'un séchage (16) est réalisé avant le criblage (18),
d) que la matière organique native issue du premier criblage, avec un surclassé > 2 mm à 30 mm, est amenée à l'étape de déshydratation (13) ou immédiatement à la lyse cellulaire thermomécanique (14),
e) que la matière organique fossile (22) issue du premier criblage (18) est amenée à une lyse cellulaire thermomécanique à une ou deux étape(s) (23) subséquente, de préférence avec une post-déshydratation respective et un criblage (24) final, et
f) que la matière introduite (10) est préchauffée.
